# EUROPEAN PATENT SPECIFICATION

(11) **EP 3 881 731 B1**
(45) Date of publication and mention of the grant of the patent: **31.08.2022**
(21) Application number: 20163783.2
(22) Date of filing: 17.03.2020
(51) Int. Cl.: A47J 31/44

(54) **A HOUSEHOLD APPARATUS WITH DRAINAGE SYSTEM**
HAUSHALTSVORRICHTUNG MIT DRAINAGESYSTEM
APPAREIL MÉNAGER DOTÉ D'UN SYSTÈME DE DRAINAGE

(43) Date of publication of application: 22.09.2021
(73) Proprietor: BSH Hausgeräte GmbH, 81739 München (DE)
(72) Inventor: Gortnar, Primoz, 1215 Medvode (SI); Kozelj, Evgen, 3327 Smartno ob Paki (SI); Sabec, Roman, 3327 Smartno (SI)

(56) References cited:
- EP-A1- 3 064 102
- EP-A1- 3 081 124
- EP-A1- 3 482 659

## Description

The present invention relates to a household apparatus, in particular a coffee machine having a housing comprising a housing side part and a housing top part, a water tank, a drip tray and a drainage channel for draining water to the drip tray.

From the state of the art a different types of brewing machines e.g. automatic coffee machines, drip or capsule coffee makers are known. Those machines employ different systems for preparing beverages such as coffee, tea or chocolate. In such systems the beverage ingredients are used either in a loose form or contained in a container like capsules or cartridges which contain a brewing substance. During the brewing process the capsule is pierced and a portion of hot water passes through in order to prepare a coffee. In another type of the brewing system, when the brewing machine comprises a grinder, freshly grinded coffee beans are transported downstream from grinder, to the brewing unit. The machine provides a certain pressure, water flow amount, time duration and temperature of the water stream. Typically, brewing machines have a body with removable water tank for clear water, a pump which delivers the water to the heating source and then to the brewing unit. The coffee machine has a drip tray that is slidably positioned at the bottom of the machine and adapted to collect the liquid - water or beverage generated during the brewing process during normal use. The drip tray comprises a place with a grill on which the receptacle is positioned, and drawer-like part vessel for collecting the liquid. The drip tray is removable from the housing to ease emptying of the collected water.

Document EP2562130A1 discloses a water dispenser including a water inlet adapted to receive water from a water supply, a water filter assembly operative to filter water received from the water supply via the water inlet and a water outlet operative to provide filtered water received from the water filter assembly, the water filter assembly including a replaceable filter cartridge and a filter socket arranged to removably receive the replaceable filter cartridge and to provide water input and water output communication therewith, the filter socket and the replaceable filter cartridge being configured such that upon vertically downward insertion of the replaceable filter cartridge into the filter socket, both the water input and the water output communication are established generally simultaneously and upon vertically upward removal of the replaceable filter cartridge from the filter socket, both the water input and the water output communication are terminated generally simultaneously. The document also disclosed a water spill collector and a pivotably mounted drainage-equipped water container support having a first operative orientation underlying the water outlet and defining a downwardly inclined water spill drainage pathway communicating with the water spill collector and a second, non-operative, orientation not underlying the water outlet.

Document US6216968B1 discloses a drainage system for a food processing machine comprises a drain pan located at the base of the machine, the drain pan receiving unwanted liquid from various locations in the machine, and permitting the removal of the unwanted liquid from the machine. In a preferred embodiment, the drain pan is employed in an ice shaver/blender machine and receives unwanted liquid generated by the melting of ice stored in the ice hopper, unwanted liquid spilled in the shaver and blender areas, and unwanted liquid collected within the main body of the machine. The drain pan includes a plurality of outlets which may be selectively chosen to facilitate routing the unwanted liquid out of the machine in a desired direction.

Document EP3081124 discloses a coffee maker comprising a top part with a top surface, wherein an opening is provided on the top surface so that spilled water is guided from the top surface though the opening to the drip tray.

Presented solutions do not provide efficient and reliable water drainage means to drain water when it spilled on the appliance. A household apparatus, in particular a coffee machine, can be flooded during use, for instance when user adds water to the water tank and accidentally spill water on the top part of the housing. It can cause that water will flood the interior of the device, causing damage of it.

The objective of the present invention is to overcome problem associated with known solution, and to provide a drainage system for a household apparatus, and more particular a drainage system for a coffee machine, wherein the spilled water on the apparatus can be collected and drained along the established path to the collecting vessel, usually a drip tray, in a safe and efficient manner.

Another object of the invention is to decrease the number of coffee machine parts, therefore decrease the assembling cost.

These objectives are solved by a coffee machine drainage system that comprises a water channel that is disposed on the inner surface of the side part, along and under the gap, and the said water channel has at least one outlet that is communicated with the drip tray.

A coffee machine is a household apparatus designed for performing a brewing process. The coffee machine has many parts like housing, water tank, brewing unit, heater, coffee grinder, a drip tray, a control process unit, usually equipped with a processor, in order to control and oversee and automation the brewing process. In such systems the beverage ingredients are used either in a loose form or contained in a container like cartridges which contain a brewing substance. During the brewing process a portion of hot water passes through the brewing unit with the coffee powder, in order to prepare a coffee. When the coffee machine comprises a grinder, freshly grinded coffee beans are transported downstream from grinder, to the brewing unit. The machine provides a certain pressure, water flow amount, time duration and temperature of the water stream. Typically, brewing machines have a body with water tank for clear water, a pump which delivers the water to the heating source and then to the brewing unit. The coffee machine has a drip tray that is slidably positioned at the bottom of the machine and adapted to collect the liquid - water or beverage generated during the brewing process during use. The drip tray usually comprises a place with a grill on which the receptacle is positioned, and drawer-like part vessel for collecting the liquid. The drip tray is removable from the housing to ease emptying of the collected water. The said coffee machine, in particular an automatic coffee machine are very comfortable and convenient for user, but they are complicated, with complicated electronic control process unit, therefore very sensitive to the flooding. The housing can be sealed in perfect manner against spilled water, but overtime within exploitation, a sealing efficiency decreases. Also the perfect sealing generates additional costs and complicates assembly of the coffee machine. So, it desired to collect and drain the spilled water to the drip tray, where can be easy removed. For this purpose the drainage system is provided.

A coffee maker according to the invention has a housing that comprises: a bottom part, a top part, with a top surface and a down surface, a side part with an inner surface and an outer surface, that is connected to the top part. Along a connecting line of the top part and the side part a gap is formed. In the bottom part of the housing a drip tray that is placed. The housing additionally comprises a water tank, and a drainage channel that comprises a water channel that is arranged on the inner surface of the side part, along and under the gap. The said water channel comprises at least one outlet that is communicated with the drip tray.

The drainage system according to the invention collects spilled water which flows through the gap to the water channel, than water flows to the outlet and falls to the drip tray where is collected, then can be easy removed. Thanks to the gravity force the draining process is performed. The housing top part, particularly a top surface of it is formed in that way that spilled water is directed to the gap. It is understood that the water channel can be implemented on both of housing sides part.

It is to be understood that both the foregoing general description and the following detailed description are exemplary, and are intended to provide further explanation of the invention as claimed. Other advantages and features of the invention will be apparent from the following description, drawings and claims.

In a preferred variant of the invention a cross-section of the water channel is in the shape of a letter "L". The advantage of such solution is that such profile of the water channel improves stiffness favourably for reliability and durability of the drainage channel.

Preferably the water channel has a bottom that protrudes substantially horizontally from the inner surface inwardly to the housing. The positive effect is that the water channel filled with water throughout the entire section.

In the another preferred embodiment of the invention the water channel forms integral part with the side part. The advantage of such solution is that the water channel with the side part is produced in injection moulding what decreases production costs.

Preferably the water channel is disposed at an upper part of the side part. So, the water channel is near to the gap, therefore the way which water must travel to achieve the water channel is short.

In the another preferred embodiment the top part is equipped with a rib, that substantially vertically protrudes from the down surface towards the water channel. Preferably the said rib has a sharp edge that serves as a drip member. The positive effect is in that the any risk that water flows outside of the water channel is eliminated.

In a favourable embodiment of the invention the bottom of the water channel is inclined towards the outlet.

Preferably the water channel is sealed closed by closing walls that are arranged on both ends of the water channel.

In the another preferred embodiment the drainage channel comprises at least one protrusion that form a water guiding means, wherein the first end of the water guiding means is communicated with the outlet and a second end of the water guiding means is communicated with the drip tray. The advantage of the solution is in that the risk that the risk of water flowing in the wrong direction is eliminated.

The present invention provides a simple and cheap the drainage channel that comprises the gap and the water channel that prevent interior of the coffee machine from flooding. The water with the side part of the housing can be produced in injection moulding technology as one part what decreases the assembling cost.

The features of the invention believed to be novel are set forth with particularity in the appended claims. The invention itself, however, may be best understood by reference to the following detailed description of the invention, which describes an exemplary embodiment of the invention, taken in conjunction with the accompanying drawings.

Further benefits and advantages of the present invention will become apparent after a careful reading of the detailed description with appropriate reference to the accompanying drawings.

In the drawings:
- Fig. 1: exemplary shows a coffee machine isometric view;
- Fig. 2: shows an enlarged fragmentary transverse cross-section a housing side part and a housing top part assembled together;
- Fig. 3: shows a housing side part inner surface;

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

In the following description of the preferred embodiments of the present invention, similar identical reference numbers designate identical or comparable components.

Typically, coffee machine has many parts like housing, water tank, brewing unit, heater, coffee grinder, a drip tray, a control process unit, usually equipped with a processor, in order to control and oversee and automation the brewing process. Moreover such coffee machines are provided also with sensors, valves to automate the brewing process for achieving the repetitive outcome. Such coffee machines can have also an automatic or manually operated a system for waste water and other fluids disposal.

Water from the water tank is delivered by the pump to the heater which heats the water to the desirable brewing temperature. During the brewing process a portion of hot water passes through the brewing unit with the coffee powder, in order to prepare a coffee. When the coffee machine comprises a grinder, freshly grinded coffee beans are transported downstream from grinder, to the brewing unit. Prepared brewing substance and flows through the coffee outlet to the cup.

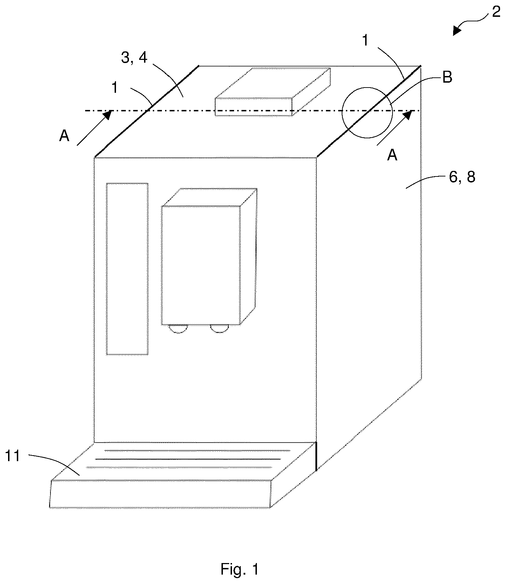

Fig. 1 shows an isometric view of a coffee machine having a housing 2 with a housing side part 6 and a housing top part 4. A housing front part comprises a discharge unit for discharging made coffee and a control panel. The coffee machine has a drip tray 11, that is slid in the housing bottom of the machine and adapted to collect the liquid, water or beverage generated during the brewing process during use. The drip tray 11 comprises a place with a grill on which the receptacle is positioned, and drawer-like part vessel (not shown on this figure) for collecting the liquid. The drip tray 11 is removable from the housing to ease emptying of the collected water. The coffee machine is equipped with a water tank, and a many components like a brewing unit, a heater, a control process unit, usually equipped with a processor, in order to control and oversee and automation the brewing process etc. which are not shown on the figure but existence of which is necessary to carry out the brewing process.

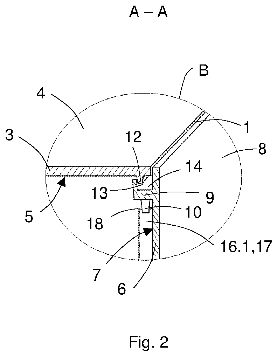

Fig. 2 shows an enlarged fragmentary transverse cross-section of the housing 2, more precisely cross-section of a housing side part 6 and a housing top part 3 assembled together. Along a connecting line of the housing top part 3 and the housing side part 6, a gap 1 is formed. The housing 2 is equipped with a drainage system that comprises a water channel 9 that is disposed on the inner surface 7 at an upper part of the side part 6 along and under the gap 1. The water channel 9 has a bottom 14 that protrudes substantially horizontally from the inner surface 7 inwardly to the housing 2. A cross-section of the water channel 9 is in the shape of a letter "L", and the water channel 9 forms integral part with the side part 6. Furtherly, the said water channel 9 comprises an outlet 10, that is communicated with a drip tray 11 (not shown) via the drainage channel that comprises five protrusions 16 (this figure shows fragmentary one of them), that form a water guiding means 17, whose the first end 18 is communicated with the outlet 10. The top part 3 is equipped with a rib 12, that substantially vertically protrudes from a down surface 5 towards the water channel 9. The rib 12 has a sharp edge 13 that serves as a drip member.

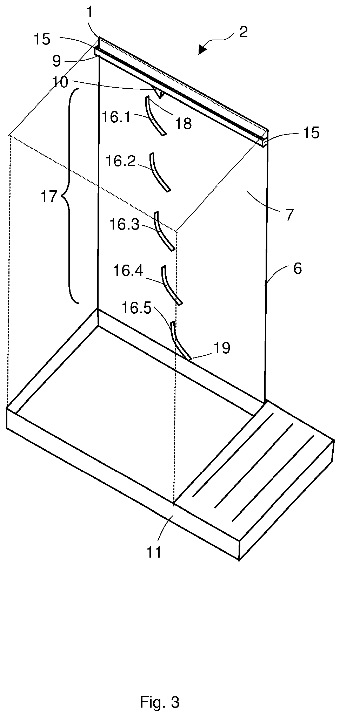

Fig. 3 shows a housing side part inner surface 7 in a perspective view. The housing 2 is equipped with a drainage system that comprises a water channel 9 that is disposed on the inner surface 7 at an upper part of the housing side part 6 along and under the gap 1. The water channel 9 has a bottom 14 that protrudes substantially horizontally from the inner surface 7 inwardly to the housing 2, and that is sealed closed by closing walls 15, that are arranged on both ends of the water channel 9. A cross-section of the water channel 9 is in the shape of a letter "L", and the water channel 9 forms integral part with the side part 6. Furtherly, the said water channel 9 comprises an outlet 10, that is communicated with a drip tray 11 via the drainage channel that comprises five protrusions 16.1...16.5, that form a water guiding means 17, whose the first end 18 is communicated with the outlet 10 and a second end 19 is communicated with the drip tray 11.

### List of reference signs.

1 gap
2 housing
3 top part
4 top surface
5 down surface
6 side part
7 inner surface
8 outer surface
9 water channel
10 outlet
11 drip tray
12 rib
13 edge
14 bottom
15 closing wall
16 protrusion
17 guiding mean
18 first end
19 second end

## Claims

1. A household apparatus, in particular a coffee maker having a housing (2) that comprises
- a top part (3) with a top surface (4) and a down surface (5),
- a side part (6) with an inner surface (7) and an outer surface (8), that is connected to the top part (3),
- a gap (1) that is formed along a connecting line of the top part (3) and the side part (6),
- a bottom part,
- a drip tray (11) that is placed in the bottom part of the housing (2),
- a water tank
- and a drainage channel
- **characterized in that** the drainage channel comprises a water channel (9) that is disposed on the inner surface (7) of the side part (6) along and under the gap (1), and **in that** the said water channel (9) comprises at least one outlet (10) that is communicated with the drip tray (11).

2. A household apparatus in accordance with claim 1, **characterized in that**, a cross-section of the water channel (9) is in the shape of a letter "L".

3. A household apparatus in accordance with claim 1 or 2, **characterized in that** a bottom (14) of the water channel (9) protrudes substantially horizontally from the inner surface (7) inwardly to the housing (2).

4. A household apparatus in accordance with any one of claims from 1 to 3, **characterized in that**, the water channel (9) forms integral part with the side part (6).

5. A household apparatus in accordance with any one of the preceding claims, **characterized in that** the water channel (9) is disposed at an upper part of the side part (6).

6. A household apparatus in accordance with any one of the preceding claims, **characterized in that**, the top part (3) is equipped with a rib (12), that substantially vertically protrudes from the down surface (5) towards the water channel (9).

7. A household apparatus in accordance with claim 6, **characterized in that**, the rib (12) has a sharp edge (13) that serves as a drip member.

8. A household apparatus in accordance with any one of the preceding claims, **characterized in that**, the bottom (14) of the water channel (9) is inclined towards the outlet (10).

9. A household apparatus in accordance with any one of the preceding claims, **characterized in that**, the water channel (9) is sealed closed by closing walls (15) that are arranged on both ends of the water channel (9).

10. A household apparatus in accordance with any one of the preceding claims, **characterized in that**, the drainage channel comprises at least one protrusion (16) that form a water guiding means (17), wherein the first end (18) of the water guiding means (17) is communicated with the outlet (10) and a second end (19) of the water guiding means (17) is communicated with the drip tray (11).

## Patentansprüche

1. Haushaltsgerät, insbesondere Kaffeemaschine, mit einem Gehäuse (2), das Folgendes umfasst:
- einen oberen Teil (3) mit einer oberen Fläche (4) und einer unteren Fläche (5),
- einen Seitenteil (6) mit einer Innenfläche (7) und einer Außenfläche (8), der mit dem oberen Teil (3) verbunden ist,
- einen Spalt (1), der an einer Verbindungslinie des oberen Teils (3) und des Seitenteils (6) entlang ausgebildet ist,
- einen unteren Teil,
- eine Abtropfschale (11), die im unteren Teil des Gehäuses (2) angeordnet ist,
- einen Wassertank,
- und einen Ablaufkanal,
- **dadurch gekennzeichnet, dass** der Ablaufkanal einen Wasserkanal (9) umfasst, der an dem Spalt (1) entlang und unter diesem an der Innenfläche (7) des Seitenteils (6) angeordnet ist, und dass der Wasserkanal (9) mindestens einen Auslass (10) umfasst, der mit der Abtropfschale (11) verbunden ist.

2. Haushaltsgerät nach Anspruch 1, **dadurch gekennzeichnet, dass** ein Querschnitt des Wasserkanals (9) die Form des Buchstabens "L" aufweist.

3. Haushaltsgerät nach Anspruch 1 oder 2, **dadurch gekennzeichnet, dass** ein Boden (14) des Wasserkanals (9) im Wesentlichen horizontal von der Innenfläche (7) aus in das Gehäuse (2) hinein vorsteht.

4. Haushaltsgerät nach einem der Ansprüche 1 bis 3, **dadurch gekennzeichnet, dass** der Wasserkanal (9) Bestandteil des Seitenteils (6) ist.

5. Haushaltsgerät nach einem der vorhergehenden Ansprüche, **dadurch gekennzeichnet, dass** der Wasserkanal (9) an einem oberen Teil des Seitenteils (6) angeordnet ist.

6. Haushaltsgerät nach einem der vorhergehenden Ansprüche, **dadurch gekennzeichnet, dass** der obere Teil (3) mit einer Rippe (12) versehen ist, die von der unteren Fläche (5) aus im Wesentlichen vertikal zum Wasserkanal (9) hin vorsteht.

7. Haushaltsgerät nach Anspruch 6, **dadurch gekennzeichnet, dass** die Rippe (12) eine scharfe Kante (13) aufweist, die als Tropfelement dient.

8. Haushaltsgerät nach einem der vorhergehenden Ansprüche, **dadurch gekennzeichnet, dass** der Boden (14) des Wasserkanals (9) zum Auslass (10) hin geneigt ist.

9. Haushaltsgerät nach einem der vorhergehenden Ansprüche, **dadurch gekennzeichnet, dass** der Wasserkanal (9) durch Abschlusswände (15) abgedichtet ist, die an seinen beiden Enden angeordnet sind.

10. Haushaltsgerät nach einem der vorhergehenden Ansprüche, **dadurch gekennzeichnet, dass** der Ablaufkanal mindestens einen Vorsprung (16) umfasst, der ein Wasserleitmittel (17) bildet, wobei das erste Ende (18) des Wasserleitmittels (17) mit dem Auslass (10) und ein zweites Ende (19) des Wasserleitmittels (17) mit der Abtropfschale (11) verbunden ist.

## Revendications

1. Appareil ménager, en particulier une machine à café qui comporte un logement (2) qui comprend :
- une partie de couverture (3) qui est munie d'une surface de couverture (4) et d'une surface de dessous (5) ;
- une partie latérale (6) qui est munie d'une surface interne (7) et d'une surface externe (8), qui est connectée à la partie de couverture (3) ;
- un espace (1) qui est formé le long d'une ligne de connexion de la partie de couverture (3) et de la partie latérale (6) ;
- une partie de fond ;
- un plateau ramasse-gouttes (11) qui est placé dans la partie de fond du logement (2) ;
- un réservoir d'eau ; et
- un canal de drainage ;
**caractérisé en ce que** le canal de drainage comprend un canal d'eau (9) qui est disposé sur la surface interne (7) de la partie latérale (6) le long et en-dessous de l'espace (1), et **en ce que** ledit canal d'eau (9) comprend au moins une sortie (10) qui communique avec le plateau ramasse-gouttes (11).

2. Appareil ménager selon la revendication 1, **caractérisé en ce qu'**une section en coupe transversale du canal d'eau (9) présente la forme d'une lettre "L".

3. Appareil ménager selon la revendication 1 ou 2, **caractérisé en ce qu'**un fond (14) du canal d'eau (9) fait saillie sensiblement horizontalement depuis la surface interne (7) en direction de l'intérieur du logement (2).

4. Appareil ménager selon l'une quelconque des revendications 1 à 3, **caractérisé en ce que** le canal d'eau (9) fait partie intégrante de la partie latérale (6).

5. Appareil ménager selon l'une quelconque des revendications précédentes, **caractérisé en ce que** le canal d'eau (9) est disposé au niveau d'une partie supérieure de la partie latérale (6).

6. Appareil ménager selon l'une quelconque des revendications précédentes, **caractérisé en ce que** la partie de couverture (3) est munie d'une nervure (12) qui fait saillie sensiblement verticalement depuis la surface de dessous (5) en direction du canal d'eau (9).

7. Appareil ménager selon la revendication 6, **caractérisé en ce que** la nervure (12) comporte un bord acéré (13) qui joue le rôle d'élément de goutte-à-goutte.

8. Appareil ménager selon l'une quelconque des revendications précédentes, **caractérisé en ce que** le fond (14) du canal d'eau (9) est incliné en direction de la sortie (10).

9. Appareil ménager selon l'une quelconque des revendications précédentes, **caractérisé en ce que** le canal d'eau (9) est fermé de façon étanche par des parois de fermeture (15) qui sont agencées sur les deux extrémités du canal d'eau (9).

10. Appareil ménager selon l'une quelconque des revendications précédentes, **caractérisé en ce que** le canal de drainage comprend au moins une protubérance (16) qui forme un moyen de guidage d'eau (17), dans lequel la première extrémité (18) du moyen de guidage d'eau (17) communique avec la sortie (10) et une seconde extrémité (19) du moyen de guidage d'eau (17) communique avec le plateau ramasse-gouttes (11).
